(19) Europäisches Patentamt

European Patent Office

Office européen des brevets

(11) Publication number: **0 288 148 B1**

(12) **EUROPEAN PATENT SPECIFICATION**

(45) Date of publication of patent specification: **17.06.92**　(51) Int. Cl.⁵: **B25J 15/04**

(21) Application number: **88302381.4**

(22) Date of filing: **18.03.88**

(54) **Quick-disconnect coupling for a work tool at a machine.**

(30) Priority: **16.04.87 US 39091**

(43) Date of publication of application:
**26.10.88 Bulletin 88/43**

(45) Publication of the grant of the patent:
**17.06.92 Bulletin 92/25**

(84) Designated Contracting States:
**DE FR GB IT**

(56) References cited:
**EP-A- 0 139 758**
**EP-A- 0 175 673**
**US-A- 4 611 377**
**US-A- 4 624 043**

(73) Proprietor: **GENERAL MOTORS CORPORA-
TION
General Motors Building 3044 West Grand
Boulevard
Detroit Michigan 48202(US)**

(72) Inventor: **Zuccaro, Dante C.
28628 Newport
Warren Michigan(US)**
Inventor: **McCurdy, Frederick A.
210 Woodsboro Drive
Royal Oak Michigan 48067(US)**

(74) Representative: **Denton, Michael John et al
Patent Section 1st Floor Gideon House 28
Chapel Street
Luton Bedfordshire LU1 2SE(GB)**

# Description

This invention relates to a quick disconnect coupling and more particularly concerns a quick disconnect coupling for coupling a work tool (or end of arm tooling device - EOAT) to a machine (support or robot) and providing a quick disconnect for electrical and fluid connections.

It is known in the art to provide quick disconnect devices for coupling a work tool to a machine wherein the coupling (or locking mechanism) is independent of the portions of the coupling which provide alignment. A known quick disconnect coupling comprising the features set out in the preamble of claim 1 is shown in EP-A-0,139,758. It is a desire of the present invention to provide a quick disconnect coupling which provides a more simplified construction and also protects the coupling mechanism from the environment.

Protection of the coupling mechanism from the environment is helpful since the coupling mechanism can sometimes be contaminated with particles from the environment such as dirt or metal shavings. Also it is desirable to protect the coupling mechanism from possible exposure to chemicals which over a passage of time can sometimes accumulate within the coupling mechanism or possibly have a corrosive effect. Another desire of the present invention is to preferably provide a quick disconnect coupling in which the two halves can not be coupled together unless the coupling halves are properly mated and aligned. Therefore, some means must preferably be provided to prevent the quick disconnect coupling from being falsely activated to lock the coupling halves together when the coupling halves are not mated and properly aligned.

The present invention is a work-tool to workstation coupling device wherein alignment is independent of the coupling mechanism. The coupling mechanism has a closure which protects the coupling mechanism from the environment when the coupling halves are separated. The closure also functions to prevent operation of the coupling mechanism when the coupling halves are not aligned or mated.

It is an object of the present invention to provide a quick disconnect coupling for a work station and a work tool, which provides some or all of the above mentioned features.

To this end, a quick disconnect coupling in accordance with the present invention is characterised over EP-A-0,139,758 by the features specified in the characterising portion of claim 1.

The present invention provides a quick disconnect coupling for connecting a tool to a machine, including a tool adapter for holding the tool having a generally axial central cavity, and at least one generally axially orientated member bordering the central cavity and projecting towards the machine, and a tool changer adapted for sequentially mating and coupling with the tool adapter and connected with the machine, the tool changer including a cylindrical shell with a generally axial interior chamber, a first fluid passage fluidly connecting the outside of the cylindrical shell and the interior chamber for controlling fluid pressure in the interior chamber, and the cylindrical shell having at least one generally radial aperture intersecting the interior chamber axially separated from the first fluid passage and towards the tool adapter, a piston slidably mounted in the interior chamber and responsive to fluid pressure in the interior chamber, the piston having a rod with a cam portion adjacent the radial aperture, a locking member movably mounted within the radial aperture for interacting with the cam portion of the rod and the axially orientated member to couple the tool changer with the tool adapter, and closure means biased to a first position whereby the radial aperture is closed when the tool changer and the tool adapter are not mated and whereby the closure means is moved to a second position by the axially orientated member to open the radial aperture when the tool changer and the tool adapter are mated, the opening of the radial aperture allowing the piston to move to cause the locking member to couple the tool changer with the tool adapter, the tool adapter having a frusto-conical surface surrounding and radially spaced from the generally axially orientated member; and the cylindrical shell of the tool changer having a frusto-conical surface along a common axial centre line with the frusto-conical surface of the tool adapter for mating therewith.

The present invention may also provide a quick disconnect coupling for coupling an EOAT to a robot, the quick disconnect coupling including a tool adapter connected with the EOAT having a generally axial central cavity, and a generally tubular axially orientated member bordering the central cavity, projecting towards the robot, and having an inward facing flange at its end toward the robot, and the tool adapter having a frusto-conical surface on its end toward the robot; and a tool changer adapted for sequentially mating and coupling with the tool adapter along a frusto-conical surface complementary to the frusto conical surface on the tool adapter and for connection with the robot, the tool changer including a cylindrical shell with a generally axial cylindrical interior chamber with an axial centre line, a first and a second fluid passage connecting the outside of the cylindrical shell and the interior chamber for controlling fluid pressure in the interior chamber, and the interior chamber having a plurality of generally radial apertures intersecting the interior chamber axially separated from the first fluid passage and towards the tool adapter, a piston slidably mounted in the interior chamber dividing the interior chamber between the first and second fluid passages and the radial apertures, and responsive to fluid pressure in the interior chamber, the piston having an attached rod with a cam portion having an approximately 7° cam angle with a line parallel with the axial centre line of the interior chamber and the cam portion being adjacent to the radial apertures, a locking member in the form of a ball movably mounted within each of the radial apertures for interacting with the cam portion of the rod and the inward facing flange of the axially orientated member to couple the tool changer with the tool adapter, and closure means including a fixed annular cover surrounding the interior chamber and a spring biased ring biased to a first position whereby the radial apertures are closed when the tool changer and the tool adapter are not mated and the spring biased ring being moved to a second position whereby the radial apertures are opened by the axially orientated member when the tool changer and the tool adapter are mated, the opening of the radial apertures allowing the balls to be captured between the cam portion of the rod and the inward facing flange of the axially orientated member to couple the tool changer with the tool adapter.

The present invention will now be described, by way of example, with reference to the accompanying drawings, in which:-

Figure 1 is a sectional view with portions in front elevation of a preferred embodiment of a quick disconnect coupling in accordance with the present invention, with a tool adapter halve (connected with an EOAT) separated from a tool changer halve (connected with a robot);

Figures 2 and 3 are views taken along lines 2-2 and 3-3 of Figure 1, respectively;

Figure 4 is a sectional view with portions in front elevation illustrating the tool adapter and the tool changer halves of the quick disconnect coupling mated and coupled together;

Figure 5 is a view taken along line 5-5 of Figure 4; and

Figure 6 is a sectional view of an alternative preferred embodiment of the present invention.

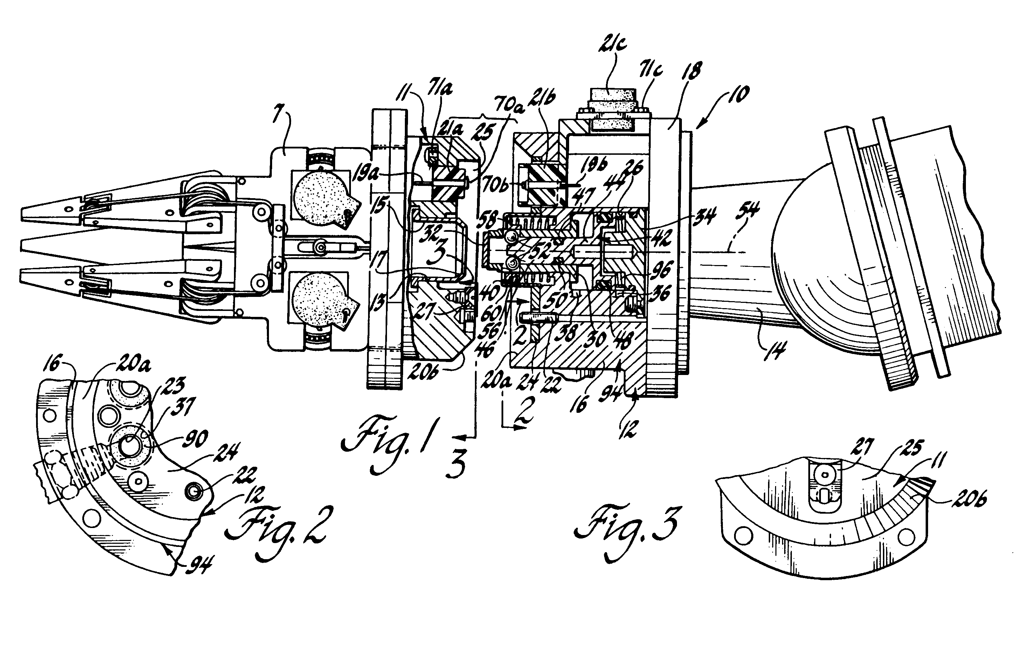

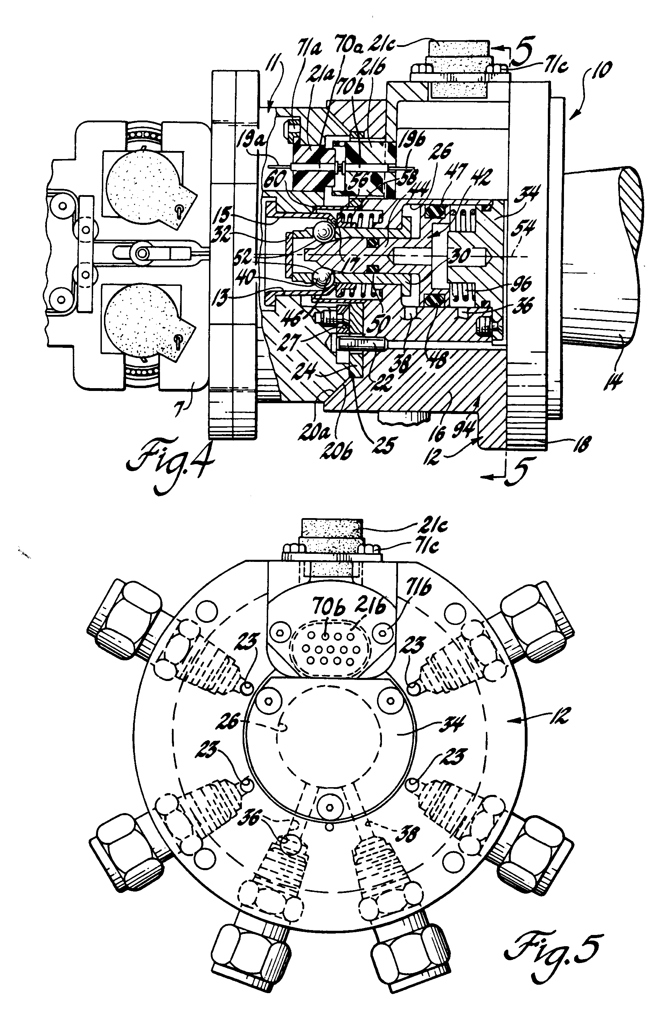

Referring to Figure 1 an EOAT 7 has connected thereto the female portion of the quick disconnect coupling 10 of the present invention commonly referred to as the tool adapter 11. Connected with a robot 14 is the male portion of the quick disconnect coupling 10 commonly referred to as the tool changer 12. The tool changer 12 is adapted for sequentially mating and coupling with the tool adapter 11. Referring additionally to Figures 2, 3, 4 and 5, the tool adapter 11 is connected with the EOAT 7 and provides fluid and electrical connections for the EOAT 7. The end of the tool adapter 11 towards the robot 14 (opposite the EOAT 7) has a cylindrical axial central cavity 13. The tool adapter 11 also has at least one generally axially orientated member 15 bordering the cylindrical axial central cavity 13. As shown in Figures 1 and 2, the axially orientated member 15 is of tubular shape and has an inward facing flange 17. The tool adapter 11 also has an electrical cable, defining leads 19a, connected to contacts 70a of an electrical connector 21a. A corresponding electrical connector 21b on the tool changer 12 has spring loaded contacts 70b connected to leads 19b. The tool changer 12 has an additonal electrical connector 21c which is used to provide an electrical plug interface for external connections. Leads 19b are connected to electrical connector 21c. Electrical connectors 21a, b and c are removable by release of fasteners 71a, b and c for substitution of alternative electrical connectors if desired.

For fluidic coupling of air or hydraulic feeds, fluid lines 23 are provided. Fluid lines (not shown) intersect surface 25 of the tool adapter 11. A hardened plate 24 on tool changer 12 has apertures 37 with inserted O-rings 90, connected with corresponding fluid lines 23, (Figure 2) to mate and seal the fluid lines of the tool adapter 11 as they engage the corresponding fluid lines 23 in the tool changer 12.

The tool changer 12 has a cylindrical shell 94 which includes a cylinder 16 and a back plate 18. The tool changer 12 has a frusto-conical surface 20a that is complementary to a frusto-conical surface 20b on the tool adapter 11. The tool changer 12 also has an axial locating pin 22 for providing rough alignment with the tool adapter 11. A locator plate 27 (Figure 3) fixably connected with tool adapter 11 is provided to encircle axial locating pin 22. The tool changer 12 has a generally axial interior chamber 26 formed by the cylinder 16 and an inner shell member 30, a cap 32 and a plug 34.

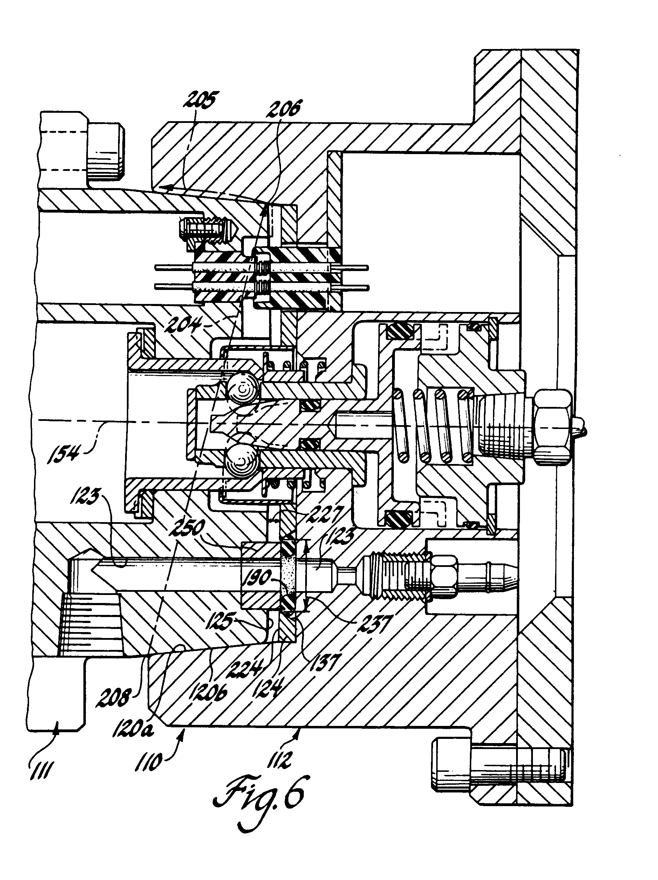

Intersecting the interior chamber 26 are first 36 and second 38 fluid passages usually provided for a pneumatic air control system. The interior chamber 26 also has axially separated from the first and second fluid passages 36, 38, on an end of the tool changer 12 away from the robot 14 (towards the tool adapter 11) a plurality of generally radial apertures 40 usually equally geometrically spaced. Slidably mounted within the interior chamber 26 is a piston 42. The piston 42 has fixably attached thereto a rod 44 with a cam portion 46. If desired, the piston 42 can be spring biased by a spring 96 captured between plug 34 and the piston 42. The piston 42 also has an O-ring 48 within an annular groove 47 of the piston which divides the interior chamber 26 into separate sealed sections. The rod 44 also has a second annular chamber with an O-ring 50 which fluidly isolates the radial apertures 40 from the remainder of the interior chamber 26. Movably mounted within each radial aperture 40 is a locking member typically a ball 52 to couple the tool changer 12 with the tool adapter 11. The piston 42 has an actuated (Figure 4) and a nonactuated (Figure 1) position. In the nonactuated position, the piston 42 is in a generally retracted position and the balls 52 are allowed to move inwardly. In the actuated position, the cam portion 46 of the piston rod 44 interacts with the balls 52 at a cam angle of, for example, between 5° and 9°, and illustrated in Figures 1 and 4 at a 7° angle from a line parallel to the axial centre line 54 of the interior chamber 26. The interaction of the cam portion 46 of the rod 44 with the balls 52 causes the balls 52 to be captured between the cam portion 46 and the inward facing flange 17 of the axially orientated member 15 coupling the tool chamber 12 with the tool adapter 11.

In use, the first fluid passage 36 supplies pressurized air to the spring 96 side of the piston 42 to move piston 42 to allow coupling of tool adapter and tool changer 11 and 12 (at this time second fluid passage 38 is connected with an exhaust). The spring 96 is included to maintain piston 42 in a coupling position in case of the loss of air pressure through first fluid passage 36. To allow uncoupling of tool adapter and tool changer 11 and 12, pressurized fluid is delivered through second fluid passage 38 and first fluid passage 36 is exhausted to atmosphere. Both fluid passages 36 and 38 are connected to exterior pneumatic lines (not shown) and the control valve for exhaust and supply is on the exterior pneumatic lines.

When the tool changer 12 and the tool adapter 11 are uncoupled, the radial apertures 40 are covered by a closure means 56 defined by a ring 58 which has an L-shaped cross-section, and which is spring biased. The ring 58 in the uncoupled position mates with a fixed angular cover 60, which surrounds the interior chamber 26 to seal radial apertures 40 from the environment.

It has usually been found that after coupling of the tool changer 12 with the tool adapter 11 the 7° cam angle allows the quick disconnect coupling halves to be held together even when air pressure is not available from the first fluid passage 36. The force exerted by spring 96 further ensures that the coupling halves are held together. A 7° cam angle will cause the uncoupling force to be approximately eight (8) times greater than the force exerted on piston 42 by the differential fluid pressure of the first and second fluid passages 36,38 (compensated by the differential areas of piston 42 by virtue of rod 44) and by the force exerted by the spring 96.

To couple the tool adapter 11 with the tool changer 12 the axially orientated member 15 first pushes the ring 58 axially to open radial apertures 40, allowing the balls 52 to be pushed outward by the cam portion 46 of the rod 44, but only if the axial locating pin 22 is aligned with the locator plate 27. Therefore, whenever there is not proper alignment between the quick disconnect coupling halves, the axially orientated member 15 can not move the ring 58 and the rod 44 will not be allowed to move to an activated position allowing the quick disconnect coupling halves to couple together. The above described feature prevents false coupling of the parts when alignment is not correct, even when air pressure is present in the first fluid passage 36 since radial apertures 40 are closed by L-shaped ring 58, preventing the outward movement of balls 52. To uncouple the quick disconnect coupling halves, pressurized air is connected with second fluid passage 38, thereby retracting the rod 44 against the spring 96 and allowing the balls 52 to move radially inward, thereby releasing axially orientated member 15. The tool adapter 11 is now released and can be removed.

Figure 6 is an alternate embodiment of quick disconnect coupling 110 with parts similar to those illustrated in Figures 1-5 having the same referenced numerals prefixed by a 1. Fluid line 123 is sealed by a concentric O-ring 190 captured in a tapered aperture 137 of hardened plate 124. A bushing 250 concentric with the O-ring 190 and connected with tool adapter 111 is provided for mating and sealing with the O-ring 190.

The bushing 250 has a diameter smaller than the minor diameter 237 of aperture 137. One advantage offered by this design is that there is a gap 227 between surface 125 and the outer surface 224 of hardened plate 124. The gap 227 allows room for dirt or other particles and prevents the particles from interfering with the sealing of fluid line 123 or interfering with the mating of tool adapter 111 with tool changer 112.

If surface 125 was used to mate and seal with O-ring 190 the compression of O-ring 190 would be limited to the cross sectional diameter of O-ring 190 minus the thickness of hardened plate 124. However, bushing 250 with a diameter less than the minor diameter 237 of aperture 137 can now further compress O-ring 190 below the level of the outer surface 224 of hardened plate 124. The above configuration allows bushing 250 to further compress O-ring 190 to a thickness less than that of hardened plate 124 providing better sealing.

Since surface 125 no longer has to be flush with outer surface 224 (to compress O-ring 190) the frusto-conical surfaces 120a and 120b can now be formed at approximately 6° instead of a 45° angle (with axial centre line 154). The 45° angle was provided to assure the flush contact between surface 125 and hardened plate 124 when the diameter of the frunsto-conical surface 120b was towards the upper end of its dimensional tolerance. If the tool adapter 111 is mated with the tool changer 112, the tool adapter 111 cannot be separated from the tool changer 112 without relative axial movement between the tool adapter 111 and the tool changer 112 or deformation of one of the frusto-conical surfaces 120a or 120b. To illustrate the above a diametrically bisecting line 204 is drawn between a point 208 of outermost contact of frusto-conical surfaces 120a and 120b and a point 206 of innermost contact of frusto-conical surfaces 120a and 120b. Moment force 205 influences tool adapter 111. Point 206 on frusto-conical surface 120b will have to take the path of arc 205 if the tool adapter 111 and tool changer remain fixed at point 208. Therefore deformation of tool changer 112 frusto-conical surface 120a must occur. Since separation cannot occur under the influence of moment forces without deformation, the quick disconnect coupling 110 is more prone to fail under an axial load. The above failure mode is desirable because of the previously explained approximately 8:1 axial force advantage of the quick disconnect coupling.

It is an object of the present invention to provide a method of sequentially mating and coupling an EOAT 7 connected with a tool adapter 11 having a generally axial central cavity 13 and at least one generally axially oriented member 15 bordering the axial central cavity 13 and projecting away from the tool adapter 11, to a robot or other machine 14 having a connected tool changer 12 which includes a cylindrical shell 94 with a generally axial interior chamber 26 including a first fluid passage 36 fluidly connecting the outside of the cylindrical shell 94 with the interior chamber 26 for controlling fluid pressure in the interior chamber, at least one generally radial aperture 40 intersecting the interior chamber and axially separated from the first fluid passage 36 and towards the tool adapter 11, a piston 42 slidably mounted in the interior chamber and responsive to fluid pressure in the interior chamber the piston having an attached rod 44 with a cam portion 46 adjacent the radial aperture 40, a locking member or ball 52 movably mounted within the radial aperture 40 for interacting with the cam portion 46 of the rod 44 and the axially oriented member 15 to couple the tool adapter 11 with the tool changer 12, closure means 56 biased to a first position whereby the radial aperture 40 is closed when the tool changer 12 and the tool adapter 11 are not mated and whereby the closure means 56 is moved by the axially oriented member 15 to a second position opening the radial aperture 40 when the tool changer 12 and the tool adapter 11 are mated, the opening of the radial aperture 40 allowing the piston 44 to move to a position causing the locking member or ball 52 to be captured between the cam portion 46 of the rod 44 and the axially oriented member 15 to couple the tool changer 12 with the tool adapter 11, the method including the following steps:

1. Mating the tool adapter 11 with the tool changer 12 and aligning the tool adapter 11 with the tool changer 12;
2. Contacting the axially oriented member 15 of the tool adapter 11 with the closure means 56 of the tool changer 12 to open the radial aperture 40;
3. Fluidly communicating the first fluid passage 36 with the outside of the cylindrical shell 94 of the tool changer 12 to move the piston 42;
4. Interacting the cam portion 46 of the piston 42 with the locking member or ball 52 whereby the locking member or ball 52 is forced outward contacting the axially oriented member 15 of the tool adapter 11 to couple the tool adapter with the tool changer 12.

**Claims**

1. A quick disconnect coupling (10,110) for connecting a tool (7) to a machine (14), comprising a tool adapter (11,111) for holding the tool and having a generally axial central cavity (13), and at least one generally axially oriented member (15) bordering the central cavity and projecting towards the machine; and a tool changer (12,112) adapted for sequentially mating and coupling with the tool adapter and connected with the machine, the tool changer including a cylindrical shell (94) with a generally axial interior chamber (26); a first fluid passage (36) fluidly connecting the outside of the cylindrical shell and the interior chamber for controlling fluid pressure in the interior chamber, and the cylindrical shell having at least one generally radial aperture (40) intersecting the interior chamber and axially separated from the first fluid passage in a direction towards the tool adapter; a piston (42) slidably mounted in the said interior chamber and responsive to fluid pressure in the interior chamber, the piston having a rod (44) with a cam portion (46) adjacent the radial aperture; and a locking member (52) movably mounted within the radial aperture for interacting with the cam portion of the rod, the piston (42) being movable to a position to cause the locking member (52) to be captured between the cam portion (46) of the rod (44) and the axially oriented member to couple the tool changer with the tool adapter; characterised by closure means (56) biased to a first position whereby the radial aperture (40) is closed when the tool changer (12,112) and the tool adapter (11,111) are not mated and whereby the closure means is moved to a second position by the axially orientated member (15) to open the radial aperture when the tool changer and the tool adapter are mated, the opening of the radial aperture allowing the piston (42) to move to cause the locking member (52) to couple the tool changer with the tool adapter; in that the tool adapter has a frusto-conical surface (20b,120b) surrounding and radially spaced from the generally axially orientated member; and in that the cylindrical shell of the tool changer has a frusto-conical surface (20a,120a) along a common axial centre line (54,154) with the frusto-conical surface of the tool adapter for mating therewith.

2. A quick disconnect coupling as claimed in claim 1, wherein the piston (42) is spring biased.

3. A quick disconnect coupling as claimed in claim 1 or claim 2, wherein the cam portion (46) has a cam angle of between 9° and 5° with respect to the axial centre line (54,154) of the tool changer (12,112).

4. A quick disconnect coupling as claimed in any one of claims 1 to 3, wherein the tool changer (12,112) has a plurality of generally radial apertures (40), each said radial aperture having a locking member (52).

5. A quick disconnect coupling as claimed in any one of claims 1 to 4, wherein the closure means (56) includes a spring biased ring (58) surrounding the interior chamber (26) and mating with a fixed annular cover (60) to provide a closed annular chamber to seal off the radial aperture or apertures (40) of the interior chamber.

6. A quick disconnect coupling as claimed in any one of claims 1 to 5, including a fluid connector for fluidly connecting a fluid line (23,123) from the tool changer (12,112) to the tool adapter (11,111).

7. A quick disconnect coupling as claimed in claim 6, wherein the fluid connector includes one of the tool adapter (111) or tool changer (112) having a plate (124) with a tapered aperture (137) having a minor diameter (237), the plate capturing an O-ring (190) concentric with the fluid line (123) and the other of the tool changer or tool adapter having a bushing (250) concentric with the O-ring with a diameter less than the minor diameter of the tapered aperture of the plate for mating and sealing with the O-ring to seal the fluid line.

8. A quick disconnect coupling as claimed in claim 7, wherein the plate (124) has a first thickness and the O-ring (190) is compressed to a thickness less than the plate by the bushing (250) when the tool adapter (111) is mated and coupled with the tool changer (112).

9. A quick disconnect coupling as claimed in any one of claims 1 to 8, including an electrical connector (21a,b) for connecting an electrical line (19a,b) from the tool changer (12,112) to the tool adapter (11,111).

10. A quick disconnect coupling as claimed in any one of claims 1 to 9, wherein the axially orientated member (15) has an inwardly facing flange (17) at its end projecting towards the machine (14), the locking member (52) interacting with the inwardly facing flange to couple the tool changer (12,112) to the tool adaptor (11,111).

11. A quick disconnect coupling as claimed in any one of claims 1 to 10, wherein a second fluid passage (38) is connected with the interior chamber (26), the second fluid passage being used in conjunction with the first fluid passage to vary the fluid pressure in the interior chamber.

12. A quick disconnect coupling as claimed in any one of claims 1 to 11, wherein one of the tool adapter (11,111) or tool changer (12,112) includes an axial locating pin (22), and the other of the tool adapter or tool changer includes a corresponding locator plate (27) for ensuring correct alignment of the tool adapter and the tool changer.

**Revendications**

1. Raccordement rapide déconnectable (10, 110) permettant de relier un outil (7) à une machine (14), comprenant un adaptateur (11, 111) d'outil destiné à porter l'outil, pourvu d'une cavité centrale (13) généralement axiale, et d'au moins un élément (15) d'orientation généralement axiale, bordant la cavité centrale et faisant saillie en direction de la machine; et un embout changeur de l'outil (12, 112), conçu pour être ajusté et accouplé, selon une séquence donnée, sur l'adaptateur d'outil, et étant connecté à la machine, l'embout changeur d'outil comprenant une enveloppe cylindrique (94) ayant une chambre intérieure (26) généralement axiale; un premier passage (36) de fluide formant une communication de fluide entre l'extérieur de l'enveloppe cylindrique et la chambre intérieure pour contrôler et réguler la pression de fluide dans la chambre intérieure, et l'enveloppe cylindrique comportant au moins une ouverture (40) généralement radiale, coupant la chambre intérieure, séparée axialement du premier passage de fluide, en direction de l'adaptateur d'outil; un piston (42) monté de façon coulissante dans la chambre intérieure réagissant à la pression de fluide régnant dans la chambre intérieure, ce piston possédant une tige (44) munie d'une partie (46) à came adjacente à l'ouverture radiale; un élément (52) de verrouillage monté de façon mobile à l'intérieur de l'ouverture radiale de manière à interagir avec la partie à came de la tige, le piston (42) pouvant être déplacé jusque dans une position ayant pour effet d'emprisonner l'élément (52) de verrouillage entre la partie (46) à came de la tige (44) et l'élément d'orientation axiale afin d'accoupler l'embout changeur d'outil à l'adaptateur de l'outil;
caractérisé par des moyens obturateurs (56) forcés dans une première position obturant l'ouverture radiale (40) lorsque l'embout changeur d'outil (12, 112) et l'adaptateur (11, 111) d'outil ne sont pas ajustés, et les moyens obturateurs (56) étant forcés dans une deuxième position par l'intermédiaire de l'élément (15) d'orientation axiale, afin d'ouvrir l'ouverture radiale lorsque l'embout changeur d'outil et l'adaptateur d'outil sont ajustés, l'ouverture de l'ouverture radiale permettant au piston (42) de se déplacer de manière à amener l'élément (52) de verrouillage à accoupler l'embout changeur d'outil avec l'adaptateur d'outil; et caractérisé en ce que l'adaptateur d'outil possède une surface tronconique (20b, 120b) qui entoure l'élément d'orientation généralement axiale et est espacée par rapport à cet élément; et en ce que l'enveloppe cylindrique de l'embout changeur d'outil possède une surface tronconique (20a, 120a) disposée sur une ligne axiale centrale (54, 154) commune avec celle de la surface tronconique de l'adaptateur d'outil, afin de s'ajuster sur ce dernier.

2. Raccordement rapide déconnectable selon la revendication 1, dans lequel le piston (42) est rappelé par un ressort.

3. Raccordement rapide déconnectable selon la revendication 1 ou la revendication 2, dans lequel la partie (46) à came présente un angle de came compris entre 9° et 5° par rapport à la ligne axiale centrale (54, 154) de l'embout changeur d'outil (12, 112).

4. Raccordement rapide déconnectable selon l'une quelconque des revendications 1 à 3, dans lequel l'embout changeur d'outil (12, 112) est pourvu d'une série d'ouvertures généralement radiales (40) dont chacune contient un élément (52) de verrouillage.

5. Raccordement rapide déconnectable selon l'une quelconque des revendications 1 à 4, caractérisé en ce que les moyens obturateurs (56) comportent un anneau (58) rappelé par ressort, qui entoure la chambre intérieure (26) et s'ajuste sur un couvercle annulaire fixe (60) de façon à constituer une chambre annulaire fermée pour isoler de façon étanche la ou les ouverture(s) (40) de la chambre intérieure.

6. Raccordement rapide déconnectable selon l'une quelconque des revendications 1 à 5, comprenant un raccord de fluide pour établir une communication de fluide d'une conduite (23, 123) de fluide entre l'embout changeur d'outil (12, 112) et l'adaptateur (11, 111) de fluide.

7. Raccordement rapide déconnectable selon la revendication 6, dans lequel le raccord de fluide comprend l'un des adaptateur (111) d'outil ou embout changeur d'outil (112), qui possède une plaque (124) pourvue d'une ouverture conique (137) ayant un petit diamètre (237), la plaque maintenant prisonnier un joint torique (190) qui est concentrique par rapport à la conduite (123) de fluide, et l'autre des adaptateur d'outil ou embout changeur d'outil possédant une douille (250) qui est concentrique par rapport au joint torique et présente un diamètre inférieur au petit diamètre de l'ouverture conique de la plaque, destinée à s'ajuster de façon étanche sur le joint torique, afin de rendre étanche la conduite de fluide.

8. Raccordement rapide déconnectable selon la revendication 7, dans lequel la plaque (124) présente une première épaisseur, et dans lequel le joint torique (190) est comprimé par la douille (250) à une épaisseur inférieure à celle de la plaque, lorsque l'adaptateur (111) d'outil est ajusté et accouplé sur l'embout changeur d'outil (112).

9. Raccordement rapide déconnectable selon l'une quelconque des revendications 1 à 8, comprenant un connecteur électrique (21a, b) destiné à brancher un conducteur électrique (19a, b) entre l'embout changeur d'outil (12, 112) et l'adaptateur (11, 111) d'outil.

10. Raccordement rapide déconnectable selon l'une quelconque des revendications 1 à 9, dans lequel l'élément (15) d'orientation axiale possède un collet (17) tourné vers l'intérieur, son extrémité s'étendant en direction de la machine (14), l'élément (52) de verrouillage interagissant avec le collet tourné vers l'intérieur pour accoupler l'embout changeur d'outil (12, 112) à l'adaptateur (11, 111) d'outil.

11. Raccordement rapide déconnectable selon l'une quelconque des revendications 1 à 10, dans lequel un deuxième passage (38) de fluide est relié à la chambre intérieure (26), le deuxième passage de fluide étant utilisé en conjonction avec le premier passage de fluide de manière à modifier la pression de fluide régnant dans la chambre intérieure.

12. Raccordement rapide déconnectable selon l'une quelconque des revendications 1 à 11, dans lequel l'un des adaptateur (11, 111) d'outil ou embout changeur d'outil (12, 112) comporte un pied de positionnement axial (22), et l'autre des adaptateur d'outil ou embout changeur d'outil comporte une plaque correspondante (27) de positionnement pour assurer un alignement correct entre l'adaptateur d'outil et l'embout changeur d'outil.

**Patentansprüche**

1. Schnellösekupplung (10, 110) zum Verbinden eines Werkzeugs (7) mit einer Maschine (14), welche umfaßt einen Werkzeug-Adapter (11, 111) zum Halten des Werkzeugs, der einen allgemein axialen zentralen Hohlraum (13) besitzt mit mindestens einem allgemein axial ausgerichteten Glied (15), das an den zentralen Hohlraum angrenzt und gegen die Maschine vorsteht; und einem zum sequentiellen Anlegen an und Koppeln mit dem Werkzeug-Adapter ausgelegten und mit der Maschine verbundenen Werkzeug-Wechsler (12, 112), wobei der Werkzeug-Wechsler enthält einen zylindrischen Mantel (94) mit einer allgemein axialen Innenkammer (26); einen ersten Fluiddurchlaß (36), der fluidisch den Außenraum des zylindrischen Mantels mit der Innenkammer zum Steuern des Fluiddrucks in der Innenkammer verbindet und der zylindrische Mantel mindestens eine allgemein radiale Öffnung (40) besitzt, die die Innenkammer überschneidet und axial von dem ersten Fluiddurchlaß in einer Richtung zum Werkzeug-Adapter hin abgetrennt ist; einen gleitbar in der Innenkammer angebrachten Kolben (42), der auf Fluiddruck in der Innenkammer reagiert, wobei der Kolben eine Kolbenstange (44) mit einem Nockenabschnitt (46) benachbart zu der radialen Öffnung besitzt; und ein bewegbar in der radialen Öffnung zur Wechselwirkung mit dem Nockenabschnitt der Stange angebrachtes Sperrglied (52), wobei der Kolben (42) in eine solche Stellung bewegbar ist, daß er das Sperrglied (52) zwischen dem Nockenabschnitt (46) der Stange (44) und dem axial ausgerichteten Glied einfangen läßt, um den Werkzeug-Wechsler mit dem Werkzeug-Adapter zu koppeln; gekennzeichnet durch in eine erste Lage vorgespanntes Verschlußmittel (56), wodurch die radiale Öffnung (40) verschlossen wird, wenn der Werkzeug-Wechsler (12, 112) und der Werkzeug-Adapter (11, 111) nicht aneinander angelegt sind, und wodurch das Verschlußmittel durch das axial ausgerichtete Glied (15) in eine zweite Lage bewegt wird zum Öffnen der radialen Öffnung, wenn der Werkzeug-Wechsler und der Werkzeug-Adapter angelegt sind, die radiale Öffnung dem Kolben (42) eine Bewegung erlaubt, um das Sperrglied (52) den WerkzeugWechsler mit dem Werkzeug-Adapter koppeln zu lassen; und dadurch gekennzeichnet, daß der Werkzeug-Adapter eine kegelstumpfförmige Oberfläche (20b, 120b) besitzt, die mit radialem Abstand das allgemein axial ausgerichtete Glied umgibt; und daß der zylindrische Mantel des WerkzeugWechslers eine kegelstumpfförmige Fläche (20a, 120a) längs einer gemeinsamen axialen Mittellinie (54, 154) mit der kegelstumpfförmigen Oberfläche des Werkzeug-Adapters besitzt zum Anlegen an dieses.

2. Schnellöse-Kupplung nach Anspruch 1, bei der der Kolben (42) federvorgespannt ist.

3. Schnellöse-Kupplung nach Anspruch 1 oder 2, bei der der Nockenabschnitt (46) einen Nokkenwinkel zwischen 9° und 5° bezüglich der axialen Mittellinie (54, 154) des Werkzeug-Wechslers (12, 112) besitzt.

4. Schnellöse-Kupplung nach einem der Ansprüche 1 bis 3, bei der der Werkzeug-Wechsler (12, 112) eine Vielzahl von allgemein radialen Öffnungen (40) aufweist und jede radiale Öffnung ein Sperrglied (52) besitzt.

5. Schnellöse-Kupplung nach einem der Ansprüche 1 bis 4, bei der das Verschlußmittel (56) einen federvorgespannten, die Innenkammer (26) umgebenden und mit einem festen Ringdeckel (60) passenden Ring (58) enthält, um eine geschlossene Ringkammer zu schaffen zum Abdichten der radialen Öffnung oder Öffnungen (40) der Innenkammer.

6. Schnellöse-Kupplung nach einem der Ansprüche 1 bis 5, einschließlich einem Fluidverbinder zum fluidischen Verbinden einer Fluidleitung (23, 123) von dem Werkzeug-Wechsler (12, 112) zu dem Werkzeug-Adapter (11, 111).

7. Schnellöse-Kupplung nach Anspruch 6, bei der der Fluidverbinder einschließt, daß der Werkzeug-Adapter (111) oder der Werkzeug-Wechsler (112) eine Platte (124) mit einer sich verjüngenden Durchgangsöffnung (137) besitzt mit einem kleineren Durchmesser (237), die Platte einen O-Ring (190) konzentrisch zur Fluidleitung (123) einfängt und das jeweilig andere Teil, Werkzeug-Adapter oder Werkzeug-Wechsler, eine zu dem O-Ring konzentrische Buchse (250) mit einem geringeren Durchmesser als dem kleineren Durchmesser der sich verjüngenden Durchgangs-Öffnung der Platte besitzt zum Anlegenen an und Abdichten mit dem O-Ring, um die Fluidleitung abzudichten.

8. Schnellöse-Kupplung nach Anspruch 7, bei der die Platte (124) eine erste Dicke besitzt und der O-Ring durch die Buchse (250) auf eine kleinere Dicke als die der Platte komprimiert wird, wenn der Werkzeug-Adapter (111) angelegt und mit dem Werkzeug-Wechsler (112) gekoppelt ist.

9. Schnellöse-Kupplung nach einem der Ansprüche 1 bis 8, die einen elektrischen Verbinder (21a, b) zum Verbinden der elektrischen Leitung (19a, b) von dem Werkzeug-Wechsler (12, 112) mit dem Werkzeug-Adapter (11, 111) enthält.

10. Schnellöse-Kupplung nach einem der Ansprüche 1 bis 9, bei der das axial gerichtete Glied (15) einen nach innen gewendeten Flansch (17) an seinem zu der Maschine (14) hin vorstehenden Ende besitzt und das Sperrglied (52) mit dem nach innen gewendeten Flansch zusammenwirkt zum Kuppeln des Werkzeug-Wechslers (12, 112) mit dem Werkzeug-Adapter (11, 111).

11. Schnellöse-Kupplung nach einem der Ansprüche 1 bis 10, bei der ein zweiter Fluiddurchlaß (38) mit der Innenkammer (26) verbunden ist, welcher zweite Fluiddurchlaß in Verbindung mit dem ersten Fluiddurchlaß zum Verändern des Fluiddrucks in der Innenkammer benutzt wird.

12. Schnellöse-Kupplung nach einem der Ansprüche 1 bis 11, bei der entweder der Werkzeug-Adapter (11, 111) oder der Werkzeug-Wechsler (12, 112) einen axialen Lokalisierstift (22) enthält und das andere Teil, Werkzeug-Wechsler oder Werkzeug-Adapter, eine entsprechende Lokalisierungsplatte (27), um korrektes Ausrichten des Werkzeug-Adapters mit dem Werkzeug-Wechsler sicherzustellen.

Fig. 1

Fig. 2

Fig. 3

Fig.4

Fig.5

11

*Fig.6*